# EUROPEAN PATENT APPLICATION

(11) **EP 4 759 511 A1**
(43) Date of publication of application: **17.06.2026**
(21) Application number: 26171622.9
(22) Date of filing: 10.04.2026
(51) Int. Cl.: B29C 48/00, B29C 48/08, B29C 48/12, B29C 48/32, B29C 55/28, B29C 65/00, B29C 48/25, B29C 48/10, B29C 48/21, B29C 48/28, B29C 48/355, B29C 48/49, B29C 48/90, B29C 48/88

(54) **A METHOD AND SYSTEM FOR PREPARING A FILM WITH AN EMBEDDED MESH**

(30) Priority: 11.04.2025 CN 202510455969
(71) Applicant: Zhang, Guozhu, Suzhou City Jiangsu (CN)
(72) Inventor: Zhang, Guozhu, Suzhou City Jiangsu (CN)
(74) Representative: Winter, Brandl - Partnerschaft mbB

(57) **Abstract**

The present invention provides a method and system for preparing a film with an embedded mesh, wherein the method comprises the following steps: In step (3, 4) S1, the melt-plasticized raw material is extruded through a zigzag die (1) to form a tubular film bubble (2) with inner convex strips (21) on the inner wall; the zigzag die (1) includes an inner circular part (11) and an outer ring part (12) arranged concentrically. In step (3, 4) S2, a rotary traction device (3) arranged at the top pulls the tubular film bubble (2) to move upward in rotation, so that the direction of the inner convex strips (21) on the inner wall of the tubular film bubble (2) is spirally upward. In step (3, 4) S3, the single-layer tubular film bubble (2) is folded or pressed, first subjected to hot pressing through a heating roller (61) area, then subjected to cooling and shaping through a cold water roller (62) area to form a double-layer flat film, and the inner convex strips (21) are cross-laminated to form an embedded mesh in the film. In step (3, 4) S4, the double-layer flat film is directly wound at the top. The present invention can significantly reduce the film thickness and the raw material cost of film preparation while maintaining good physical properties of the film.

## Description

### TECHNICAL FIELD

The present invention relates to the field of film preparation, and specifically to a method and system for preparing a film with an embedded mesh.

### BACKGROUND ART

Blow-molded multi-layer co-extruded films are widely used in packaging, chemical industry, automobile, medical and agricultural fields due to their flexible material combination and high cost performance. However, the films prepared by this process have significant anisotropic mechanical properties, and their machine direction (MD) tensile strength (or longitudinal direction tensile strength) is usually much higher than the transverse direction (TD) strength. To meet the application requirements of high strength and high toughness, the prior art achieves this by replacing with high-strength materials. However, high-strength materials (such as special engineering plastics or modified resins) are costly, which greatly increases the use cost of end users. The prior art also increases the film thickness to improve film strength and toughness, but increasing the thickness leads to an increase in material consumption, which conflicts with global "plastic restriction and reduction" policies.

Under the above contradictions, the industry urgently needs a breakthrough technology that balances film strength and preparation cost, avoiding reliance on high-cost materials or complex post-processing processes.

### SUMMARY OF THE INVENTION

### (Technical Problem)

Aiming at the defects in the prior art, the purpose of the present invention is to provide a method and system for preparing a film with an embedded mesh, which aims to significantly reduce the film thickness and the raw material cost of film preparation while maintaining good physical properties of the film.

### (Solution to Problem)

To achieve the above invention objectives, the present invention adopts the following technical solutions:

According to a first aspect of the present invention, a method for preparing a film with an embedded mesh is provided, comprising the following steps:

In step S1, the melt-plasticized raw material is extruded through a zigzag die to form a tubular film bubble with inner convex strips on the inner wall; The zigzag die includes an inner circular part and an outer ring part arranged concentrically, an annular gap is formed between the inner circular part and the outer ring part; The inner circular part is further provided with an air tunnel, and the air tunnel blows air upward to form the tubular film bubble; The outer edge of the inner circular part is provided with a number of zigzags; The zigzags are square, the zigzag width is greater than or equal to 1mm and less than or equal to 300mm, the zigzag length is greater than or equal to 0.1mm and less than or equal to 100mm, and the zigzag gap is greater than or equal to 0.5mm and less than or equal to 300mm;

In step S2, a rotary traction device arranged at the top pulls the tubular film bubble to move upward according to a preset traction speed, and at the same time, the rotary traction device performs 360° self-rotation according to a preset rotation speed and drives the tubular film bubble to rotate, so that the direction of the inner convex strips on the inner wall of the tubular film bubble is spirally upward;

In step S3, a composite winding device arranged at the top folds or presses the single-layer tubular film bubble, first performs hot pressing through a heating roller area, then performs cooling and shaping through a cold water roller area to form a double-layer flat film, and the inner convex strips are cross-laminated to form an embedded mesh in the film; the composite winding device performs 360° self-rotation at the same rotation speed as the rotary traction device;

In step S4, the composite winding device directly winds the double-layer flat film at the top.

In this technical solution, during Step S1, as the melt-plasticized raw passes through the zigzag die, the flow-splitting effect of the zigzags on the inner circular part forms initial continuous convex strips parallel to the axial direction on the inner wall of the film bubble. The shape, dimensions and spacing of these convex strips are determined by the geometric parameters of the zigzags. In Step S2, the rotary traction device drives the entire film bubble to rotate, and the originally axially parallel convex strips are twisted to form a continuous spiral-upward trajectory of convex strips. The spiral density and mesh size can be precisely controlled by adjusting the traction speed and preset rotation speed. In Step S3, the single-layer film bubble with spiral convex strips is folded or pressed face-to-face, so that the spiral convex strips on the two film layers interlock with each other in the thickness direction. Under the action of hot-pressing rollers, the interlocking points are fused and fixed, finally forming a three-dimensional mesh-like reinforced structure. The core advantages of this process are as follows: the reinforcing mesh and the film substrate are integrally formed in one step, avoiding the delamination defect common in traditional laminated mesh films; meanwhile, the mesh structure can effectively disperse stress, enabling the substrate thickness to be greatly reduced while maintaining or even exceeding the mechanical properties of the original film.

Through the above in-situ construction process of "extrusion to form ribs-rotation to form spirals-folding to form a mesh", the present invention overcomes the limitation in the prior art that film reinforcement relies on additional material layers or post-treatment processes, realizes one-step integral forming of the reinforcing mesh and the film substrate, avoids delamination defects, and maintains excellent mechanical properties while significantly reducing the substrate thickness.

Preferably, in step S3, the pressing pressure of the heating rollers in the heating roller area is adjustable, and the temperature and pressure of the heating rollers are controlled in stages according to material properties; The cold water roller area is composed of a number of cold water rollers with built-in low-temperature liquid; The temperature and pressure of the heating rollers and cold water rollers can be uniformly controlled by a roller control device.

Preferably, in step S1, multiple independent extruders can be arranged to respectively transport raw materials of different functional layers for multi-layer co-extrusion.

Preferably, in step S2, a limiting device is arranged outside the tubular film bubble to limit the position of the tubular film bubble, and an air cooling device is arranged outside the tubular film bubble to pre-cool it.

Preferably, according to the requirements of the longitudinal and transverse strength of the film, the values of the corresponding preset traction speed V and preset rotation speed ω are calculated and set, and the crossing angle of each inner convex strip in the embedded mesh of the film is adjusted by controlling the ascending speed and rotation speed of the tubular film bubble. By adjusting the ratio of the traction speed V to the rotation speed ω, the intersecting angle α of the inner convex strips can be precisely controlled (α=arctan(ωR/V), where R is the radius of the film bubble), so as to design the density and angle of the mesh on demand and realize the controllable adjustment of the longitudinal-transverse strength ratio of the film.

Preferably, in step S4, a tension control device is used to control the tension of the double-layer flat film.

According to a second aspect of the present invention, a system for preparing a film with an embedded mesh, characterized in that it comprises: a zigzag die, a rotary traction device, and a composite winding device;

The zigzag die is used for extruding a tubular film bubble with inner convex strips on the inner wall, the zigzag die includes an inner circular part and an outer ring part, the inner circular part and the outer ring part are arranged concentrically, an annular gap is formed between the inner circular part and the outer ring part for extruding the raw material;The inner circular part is further provided with an air tunnel for blowing air upward to form the tubular film bubble; the outer edge of the inner circular part is provided with a number of zigzags;The zigzags are square, the zigzag width is greater than or equal to 1mm and less than or equal to 300mm, the zigzag length is greater than or equal to 0.1mm and less than or equal to 100mm, and the zigzag gap is greater than or equal to 0.5mm and less than or equal to 300mm;

The rotary traction device is used for pulling the tubular film bubble to rotate and ascend at the top; the rotary traction device pulls the tubular film bubble to move upward according to a preset traction speed, and at the same time performs 360° self-rotation according to a preset rotation speed and drives the tubular film bubble to rotate, so that the direction of the inner convex strips on the inner wall of the tubular film bubble is spirally upward;

The composite winding device is used for folding or pressing the single-layer tubular film bubble to form a double-layer flat film, the inner convex strips are cross-laminated to form an embedded mesh in the film, and directly winds the double-layer flat film at the top; the composite winding device includes a heating roller area and a cold water roller area; the heating roller area is composed of a number of heating rollers, and the temperature and pressing pressure of the heating rollers are adjustable; the cold water roller area is composed of a number of cold water rollers with built-in low-temperature liquid; the composite winding device performs 360° self-rotation at the same rotation speed as the rotary traction device.

Preferably, the system further comprises:

A roller control device for uniformly controlling the temperature and pressure of the heating rollers and cold water rollers;

A tension control device for controlling the tension of the double-layer flat film during the winding process of the double-layer flat film;

A limiting device arranged outside the tubular film bubble to limit the position of the tubular film bubble;

An air cooling device for pre-cooling the tubular film bubble and cooling it by air before the tubular film bubble enters the composite winding device.

### (Advantageous Effect)

Compared with the prior art, the present invention has the following beneficial effects:

By extruding a tubular film bubble with inner convex strips on the inner wall, and pulling it to rotate and ascend at the top before compounding it into a double-layer flat film, the present invention enables the inner convex strips to be cross-laminated to form an embedded mesh in the film, thereby reducing the film thickness and greatly saving the preparation cost on the premise of ensuring the physical properties of the finished film.

### Brief Description of the Drawings

In the accompanying drawings:
Figure 1 is a schematic structural diagram of the zigzag die described in Embodiment 1;
Figure 2 is a schematic principle diagram of the method in Embodiment 1;
Figure 3 is a schematic flow diagram of the method described in Embodiment 1.

In the figures:
1 - Zigzag die; 11 - Inner circular part; 12 - Outer ring part; 13 - Air tunnel; 14 - Annular gap; 15 - Zigzag;
2 - Tubular film bubble; 21 - Inner convex strip;
3 - Rotary traction device;
4 - Limiting device;
5 - Air cooling device;
6 - Composite winding device; 61 - Heating roller; 62 - Cold water roller; 63 - Winding guide roller.

### Description of Embodiment

To make the objectives, technical solutions and advantages of the embodiments of the present invention clearer, the technical solutions in the embodiments of the present invention will be clearly and completely described below with reference to the drawings in the embodiments of the present invention. Obviously, the described embodiments are part of the embodiments of the present invention, not all of them. The components of the embodiments of the present invention generally described and shown in the drawings can be arranged and designed in various different configurations.

Therefore, the detailed description of the embodiments of the present invention provided below in the drawings is not intended to limit the scope of the claimed present application, but only represents selected embodiments of the present invention. Based on the embodiments in the present invention, all other embodiments obtained by those of ordinary skill in the art without creative work shall fall within the protection scope of the present invention.

It should be noted that: similar reference numerals and letters indicate similar items in the following drawings, so once an item is defined in one drawing, it does not need to be further defined and explained in subsequent drawings. In addition, all directional indicators (such as up, down, left, right, front, back, bottom, top...) in the present invention are only used to explain the relative positional relationship and movement situation between various components under a specific posture (as shown in the drawings). If the specific posture changes, the directional indicators will also change accordingly.

### <A method for preparing a film with an embedded mesh>

### Embodiment 1

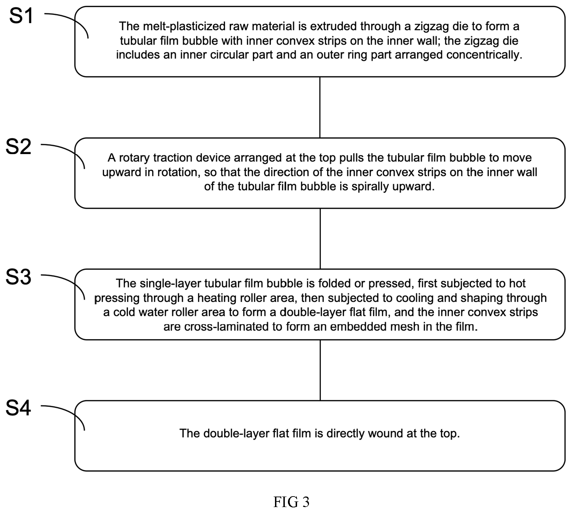

This embodiment provides a method for preparing a film with an embedded mesh, as shown in Figure 3, comprising the following steps:

In step S1, the raw material is extruded through a zigzag die 1 to form a tubular film bubble 2. After being melt-plasticized, the raw material is extruded through the zigzag die 1 arranged at the lower part and extended to form a tubular film bubble 2 with inner convex strips 21 on the inner wall.

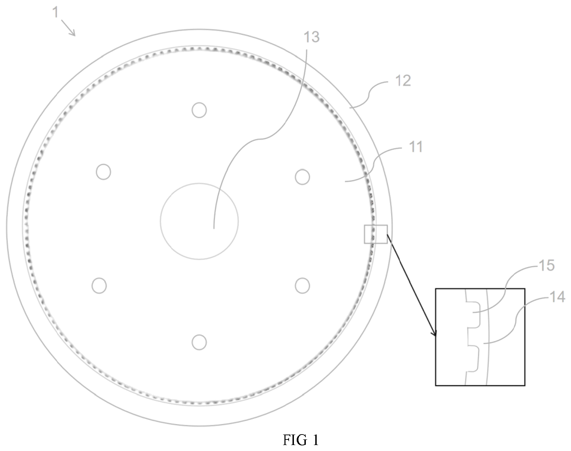

Specifically, as shown in Figure 1, the zigzag die 1 includes an inner circular part 11 and an outer ring part 12, the inner circular part 11 and the outer ring part 12 are arranged concentrically, and an annular gap 14 is formed between them for extruding the raw material. The inner circular part 11 is further provided with an air tunnel 13 for blowing air upward to form the tubular film bubble 2. The outer edge of the inner circular part 11 is provided with a number of zigzags 15, so that when the raw material is extruded from the annular gap 14, concave-convex lines are formed on the inner ring, thereby making the inner wall of the tubular film bubble 2 protrude inward to form inner convex strips 21.

Further, the size of the zigzags 15 will affect the shape, size and density of the inner convex strips 21, thereby affecting the machine direction (or longitudinal direction tensile strength) and transverse direction tensile strength of the embedded mesh in the film. To improve the strength of the finished film, the zigzags 15 are preferably square,the zigzag width is greater than or equal to 1mm and less than or equal to 300mm, the zigzag length is greater than or equal to 0.1mm and less than or equal to 100mm, and the zigzag gap is greater than or equal to 0.5mm and less than or equal to 300mm.

Further, multiple independent extruders can be arranged to respectively transport raw materials of different functional layers, so as to realize multi-layer co-extrusion including inner layer, middle layer, outer layer and additional layer, meeting the film use requirements.

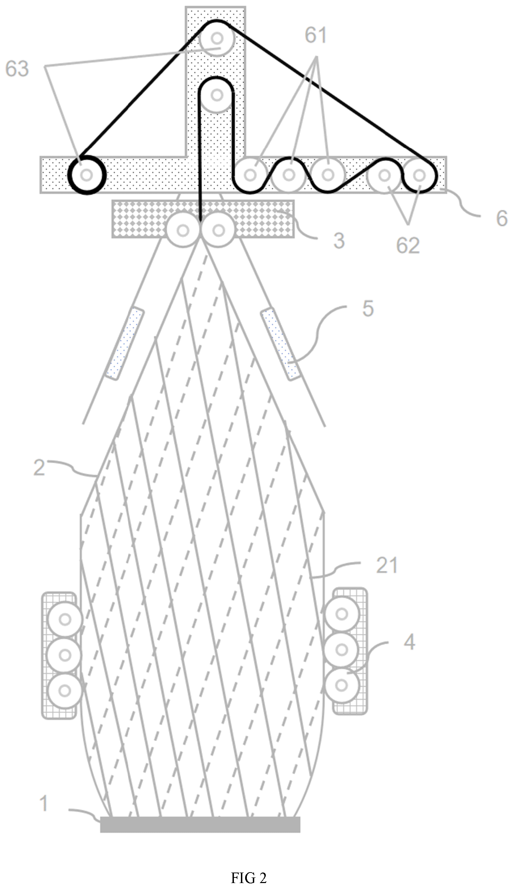

In step S2, the tubular film bubble 2 is pulled to rotate and ascend at the top. As shown in Figure 2, after the tubular film bubble 2 is extruded from the zigzag die 1 arranged at the lower part, the tubular film bubble 2 is rotated and stretched to move upward in rotation through the rotary traction device 3, thereby changing the direction of the inner convex strips 21 on the inner wall of the tubular film bubble 2. Specifically, when the tubular film bubble 2 is extruded from the zigzag die 1 at the lower part, the inner wall is provided with inner convex strips 21 distributed in parallel; the rotary traction device 3 arranged at the top pulls the tubular film bubble 2 to move upward according to a preset traction speed; at the same time, the rotary traction device 3 rotates 360° on its own axis according to a preset rotation speed, and the rotary traction device 3 clamps the upper part of the tubular film bubble 2, so that the tubular film bubble 2 rotates, and further the direction of the inner convex strips 21 on the inner wall of the tubular film bubble 2 is spirally upward.

Further, a limiting device 4 can be arranged outside the tubular film bubble 2 to limit the position of the tubular film bubble 2, preventing it from being skewed and damaged during the rotation and ascending process.

In step S3, the single-layer tubular film bubble 2 is subjected to double-layer film compounding and hot-press shaping. The tubular film bubble 2 is pulled by the rotary traction device 3 to reach the composite winding device 6 arranged at the top, and the single-layer tubular film bubble 2 is folded or pressed to form a double-layer flat film, and the inner convex strips 21 are cross-laminated to form an embedded mesh in the film. The composite winding device 6 rotates 360° on its own axis at the same rotation speed as the rotary traction device 3 to avoid the single-layer tubular film bubble 2 being torn or wrinkled during double-layer film compounding.

Further, the composite winding device 6 includes a heating roller area and a cold water roller area. The heating roller area is used for hot-melting and bonding the interface, and is composed of a number of heating rollers 61 with adjustable temperature. The pressing pressure of the heating rollers is adjustable, and the temperature and pressure of the heating rollers are controlled in stages according to material properties. The cold water roller area is composed of a number of cold water rollers 62 with built-in low-temperature liquid, which is used for rapid cooling and shaping of the double-layer flat film to ensure the interlayer bonding strength and dimensional stability. The single-layer tubular film bubble 2 is folded or pressed, first subjected to hot pressing through the heating roller area, then subjected to cooling and shaping through the cold water roller area to form a double-layer flat film. The temperature and pressure of the heating rollers 61 and cold water rollers 62 can be uniformly controlled by a roller control device (not shown in the figure) to enhance the efficiency of film compounding and the quality of finished products.

Further, before the tubular film bubble 2 enters the composite winding device, the tubular film bubble 2 is pre-cooled. For example, an air cooling device 5 can be arranged outside the tubular film bubble 2 to cool it by air.

Further, according to the requirements of the machine direction (or longitudinal direction tensile strength) and transverse direction strength of the film, the values of the corresponding preset traction speed and preset rotation speed can be calculated and set, and the crossing angle of each inner convex strip 21 in the embedded mesh of the film can be adjusted by controlling the ascending speed and rotation speed of the tubular film bubble 2, so as to form a mesh shape of the embedded mesh in the film that best meets the film use requirements and satisfies the film strength requirements.

In step S4, the double-layer flat film is wound at the top. The double-layer flat film produced in step S3 is directly wound at the top under traction, instead of being pulled to the lower part for winding, which can save redundant moving distance, reduce the risk of film breakage caused by sudden changes in film tension, and also reduce the equipment floor space and energy consumption, making the production line layout more compact. Specifically, as shown in Figure 2, step S4 is directly completed by the composite winding device 6: the single-layer tubular film bubble 2 is sequentially subjected to hot pressing through the heating roller area and cooling and shaping through the cold water roller area to form a double-layer flat film, and continues to be directly wound at the top under the rotation of the winding guide roller 63.

Further, during the winding process, a tension control device (not shown in the figure) can be used to control the tension of the double-layer flat film, avoiding wrinkles or stretching deformation during the winding process.

It should be particularly noted that the steps in this embodiment are not simply superposed, but act synergistically to jointly achieve effects unattainable by a single process. Specifically:

Synergy between S1 and S2: With only S1 and without S2 (as shown in Comparative Example 1), the convex strips remain parallel and can only form parallel overlapping after folding, failing to form a cross mesh. With only S2 and without S1 (as shown in Comparative Example 2), the inner wall of the film bubble is smooth, and rotation will not produce any reinforcing structure.

Synergy between S1+S2 and S3: With only S1+S2 and without S3 (as shown in Comparative Example 3), the two film layers are simply stacked, and the crossing points of the convex strips are not fused, making them prone to slip and separation under stress, failing to form an overall reinforcing effect.

Synergy between process parameters and structure: By controlling the ratio of traction speed to rotation speed, the density and angle of the mesh can be precisely adjusted, thereby realizing the on-demand design of the longitudinal - transverse strength ratio of the film, which cannot be achieved by conventional processes.

Optionally, the double-layer flat film can be post-processed according to actual needs, such as corona treatment and coating treatment on the film surface, so as to improve the printing or compounding performance and meet the diversified film use requirements.

To verify the physical properties of the film prepared by the method of this embodiment, a test sample A was prepared by using the method described in this embodiment for testing. The raw material formula for preparing test sample A is: 60% low-density polyethylene (LDPE) of model 2426H, 38% linear low-density polyethylene (LLDPE) of model 7042, 1% anti-aging agent, and 1% opening agent.

The mass per unit area of test sample A was measured. According to the test method of ISO9864:2005, in a laboratory environment with a temperature of 23(±2)°C and a humidity of 50(±5)%RH, an XP204 electronic balance was used to measure the mass per unit area of the test sample A as 32g/m².

The thickness of test sample A was measured. According to the test method of ISO4593:1993, in a laboratory environment with a temperature of 23(±2)°C and a humidity of 50(±5)%RH, under a load of 0.8N, a TG-3130-A3 digital desktop thickness gauge was used to measure the thickness of the non-embedded mesh area (plain surface) of the test sample A as 0.024mm, and the thickness of the embedded mesh area (ribbed surface) as 0.094mm.

The tensile test of the test sample A was carried out. The test method was ISO527-3:2018, the laboratory environment temperature was 23(±2)°C, the humidity was 50(±5)%RH, the sample type was type 2, the sample width was 15mm, the sample thickness (transverse direction) was 0.061mm, the sample thickness (longitudinal direction) was 0.065mm, the test speed was 500mm/min, the gauge length was 50mm, the initial clamp spacing was 100mm, and the test equipment was a single-arm tensile machine (model BT2-FZ2.5TH.D16.001). Finally, the tensile strength (transverse direction) of test sample A was measured as 13.3MPa, the tensile strength (longitudinal direction) as 27.5MPa, the elongation at break (transverse direction) as 652%, and the elongation at break (longitudinal direction) as 191%.

The dart impact strength test of the test sample A was carried out. The test method was ISO7765-1:1988 (Method A), the laboratory environment temperature was 23(±2)°C, the humidity was 50(±5)%RH, the sample thickness was 0.075mm, the test equipment was a dart impact tester (model FDI-01), and finally the impact damage mass was measured to be less than 35g.

According to the aforementioned test results, it can be known that the film with an embedded mesh prepared by the method provided in this embodiment can still ensure good physical properties while reducing the film thickness, greatly saving the preparation cost.

### <A system for preparing a film with an embedded mesh>

### Embodiment 2

This embodiment provides a system for preparing a film with an embedded mesh, which can realize the method for preparing a film with an embedded mesh described in Embodiment 1 through the cooperation of various components of the system. The system provided in this embodiment includes: a zigzag die, a rotary traction device, and a composite winding device. Among them:

The zigzag die is used for extruding a tubular film bubble with inner convex strips on the inner wall. The zigzag die includes an inner circular part and an outer ring part, the inner circular part and the outer ring part are arranged concentrically, an annular gap is formed between the inner circular part and the outer ring part for extruding the raw material. The inner circular part is further provided with an air tunnel for blowing air upward to form the tubular film bubble. The outer edge of the inner circular part is provided with a number of zigzags. Further, the zigzags are preferably square, with the size: the zigzag width is greater than or equal to 1mm and less than or equal to 300mm, the zigzag length is greater than or equal to 0.1mm and less than or equal to 100mm, and the zigzag gap is greater than or equal to 0.5mm and less than or equal to 300mm.

The rotary traction device is used for pulling the tubular film bubble to rotate and ascend at the top. When the tubular film bubble is extruded from the zigzag die at the lower part, the inner wall is provided with inner convex strips distributed in parallel. The rotary traction device arranged at the top pulls the tubular film bubble to move upward according to a preset traction speed; at the same time, the rotary traction device rotates 360° on its own axis according to a preset rotation speed, so that the tubular film bubble rotates, and further the direction of the inner convex strips 21 on the inner wall of the tubular film bubble 2 is spirally upward.

The composite winding device is used for folding or pressing the single-layer tubular film bubble to form a double-layer flat film, the inner convex strips are cross-laminated to form an embedded mesh in the film, and directly winds the double-layer flat film at the top. The composite winding device includes a heating roller area, a cold water roller area and a winding guide roller. After entering the composite winding device, the tubular film bubble will pass through the heating roller area and the cold water roller area in sequence, and be directly wound at the top under the rotation of the winding guide roller. The heating roller area is composed of a number of heating rollers with adjustable temperature, and the temperature and pressing pressure of the heating rollers are adjustable; The cold water roller area is composed of a number of cold water rollers with built-in low-temperature liquid. The composite winding device rotates 360° on its own axis at the same rotation speed as the rotary traction device to avoid the single-layer tubular film bubble being torn or wrinkled during double-layer film compounding.

The system provided in this embodiment further includes a roller control device for uniformly regulating the temperature and pressure of the heating rollers and cold water rollers to enhance the efficiency of film compounding and the quality of finished products.

The system provided in this embodiment further includes a tension control device for controlling the tension of the double-layer flat film during the winding process of the double-layer flat film, avoiding wrinkles or stretching deformation during the winding process.

The system provided in this embodiment further includes a limiting device arranged outside the tubular film bubble to limit the position of the tubular film bubble, preventing it from being skewed and damaged during the rotation and ascending process.

The system provided in this embodiment further includes an air cooling device for pre-cooling the tubular film bubble and cooling it by air before the tubular film bubble enters the composite winding device.

It should be noted that the explanations of various implementations and beneficial effects described in Embodiment 1 above are also applicable to this embodiment, and will not be elaborated here to avoid redundancy.

### Comparative Example 1: No Rotary Traction

Preparation process: The same raw materials and zigzag die as in Example 1 were used, but the rotary traction device did not rotate and only performed vertical traction. The subsequent steps were identical to those of Example 1.

Results: The inner convex strips in the film remained parallel and formed parallel overlapping after folding, so that a cross mesh could not be formed. Tensile tests showed that the mass per unit area was 31.8 g/m² (substantially consistent with 32 g/m² in Example 1), and the longitudinal strength was merely 16 MPa, which is far lower than 27.5 MPa in Example 1.

### Comparative Example 2: No Zigzag Die

Preparation process: The melt-plasticized raw material was extruded through a conventional flat die without zigzags, and Test Sample B was obtained under otherwise identical conditions as Example 1. The film bubble of Test Sample B had a smooth inner wall free of inner convex strips.

Results: Test Sample B was tested under the same conditions as Example 1: The mass per unit area was determined to be 32.2 g/m²; The thickness measurement showed uniform overall thickness of about 0.035 mm (no distinction between mesh regions and non-mesh regions due to the absence of convex strips); Tensile test results: longitudinal tensile strength 20.8 MPa, transverse tensile strength 17.3 MPa, longitudinal elongation at break 412%, transverse elongation at break 558%; Dart impact strength test result: impact failure mass less than 28 g; Interlayer adhesion test result: the two film layers could be partially separated by gentle peeling, indicating weak adhesion.

In Test Sample B, the absence of zigzags in the die resulted in a smooth inner wall of the film bubble without inner convex strips. Although rotary traction can change molecular orientation, it cannot form a macroscopic mesh structure. After folding and hot pressing, the two film layers are fused only by planar contact without anchoring at mesh intersections, thereby leading to poor interlayer adhesion and tensile strength (in particular longitudinal strength) much lower than that of Example 1 (20.8 MPa vs. 27.5 MPa). This indicates that the zigzag die (Step S1) constitutes the basis for preforming inner convex strips and constructing a mesh framework; without this step, embedded mesh formation in the film cannot be realized.

### Comparative Example 3: No Hot Pressing and Setting Step

Preparation process: The hot pressing step in Step S3 was omitted; the single-layer tubular film bubble was folded or pressed together and then only subjected to cooling and setting in the cold water roller zone. The other steps were identical to those of Example 1.

Results: The crossing points of the convex strips of the two film layers were not fused and could be separated by gentle peeling. Under tensile load, the two film layers bore stress separately without synergistic reinforcement. Although the mass per unit area was 32.5 g/m², the longitudinal strength was only 18 MPa.

The specific embodiments of the present invention have been described above. Through the above description, relevant staff can make various changes and modifications without departing from the scope of the technical idea of the present invention.

## Claims

1. A method for preparing a film with an embedded mesh, **characterized in that**, comprising the following steps:
In step S1, the melt-plasticized raw material is extruded through a zigzag die to form a tubular film bubble with inner convex strips on the inner wall; The zigzag die includes an inner circular part and an outer ring part arranged concentrically, an annular gap is formed between the inner circular part and the outer ring part; The inner circular part is further provided with an air tunnel, and the air tunnel blows air upward to form the tubular film bubble; The outer edge of the inner circular part is provided with a number of zigzags; The zigzags are square, the zigzag width is greater than or equal to 1mm and less than or equal to 300mm, the zigzag length is greater than or equal to 0.1mm and less than or equal to 100mm, and the zigzag gap is greater than or equal to 0.5mm and less than or equal to 300mm;
In step S2, a rotary traction device arranged at the top pulls the tubular film bubble to move upward according to a preset traction speed, and at the same time, the rotary traction device performs 360° self-rotation according to a preset rotation speed and drives the tubular film bubble to rotate, so that the direction of the inner convex strips on the inner wall of the tubular film bubble is spirally upward;
In step S3, a composite winding device arranged at the top folds or presses the single-layer tubular film bubble, first performs hot pressing through a heating roller area, then performs cooling and shaping through a cold water roller area to form a double-layer flat film, and the inner convex strips are cross-laminated to form an embedded mesh in the film; the composite winding device performs 360° self-rotation at the same rotation speed as the rotary traction device;
In step S4, the composite winding device directly winds the double-layer flat film at the top.

2. The method for preparing a film with an embedded mesh according to Claim 1, **characterized in that**, in step S3, the pressing pressure of the heating rollers in the heating roller area is adjustable, and the temperature and pressure of the heating rollers are controlled in stages according to material properties; The cold water roller area is composed of a number of cold water rollers with built-in low-temperature liquid; The temperature and pressure of the heating rollers and cold water rollers can be uniformly controlled by a roller control device.

3. The method for preparing a film with an embedded mesh according to Claim 1, **characterized in that**, in step S1, multiple independent extruders can be arranged to respectively transport raw materials of different functional layers for multi-layer co-extrusion.

4. The method for preparing a film with an embedded mesh according to Claim 1, **characterized in that**, in step S2, a limiting device is arranged outside the tubular film bubble to limit the position of the tubular film bubble, and an air cooling device is arranged outside the tubular film bubble to pre-cool it.

5. The method for preparing a film with an embedded mesh according to Claim 1, **characterized in that**, according to the requirements of the longitudinal and transverse strength of the film, the values of the corresponding preset traction speed V and preset rotation speed *ω* are calculated and set, and the crossing angle of each inner convex strip in the embedded mesh of the film is adjusted by controlling the ascending speed and rotation speed of the tubular film bubble.

6. The method for preparing a film with an embedded mesh according to Claim 1, **characterized in that**, in step S4, a tension control device is used to control the tension of the double-layer flat film.

7. A system for preparing a film with an embedded mesh, **characterized in that** it comprises: a zigzag die, a rotary traction device, and a composite winding device;
The zigzag die is used for extruding a tubular film bubble with inner convex strips on the inner wall, the zigzag die includes an inner circular part and an outer ring part, the inner circular part and the outer ring part are arranged concentrically, an annular gap is formed between the inner circular part and the outer ring part for extruding the raw material;The inner circular part is further provided with an air tunnel for blowing air upward to form the tubular film bubble; the outer edge of the inner circular part is provided with a number of zigzags; The zigzags are square, the zigzag width is greater than or equal to 1mm and less than or equal to 300mm, the zigzag length is greater than or equal to 0.1mm and less than or equal to 100mm, and the zigzag gap is greater than or equal to 0.5mm and less than or equal to 300mm;
The rotary traction device is used for pulling the tubular film bubble to rotate and ascend at the top; the rotary traction device pulls the tubular film bubble to move upward according to a preset traction speed, and at the same time performs 360° self-rotation according to a preset rotation speed and drives the tubular film bubble to rotate, so that the direction of the inner convex strips on the inner wall of the tubular film bubble is spirally upward;
The composite winding device is used for folding or pressing the single-layer tubular film bubble to form a double-layer flat film, the inner convex strips are cross-laminated to form an embedded mesh in the film, and directly winds the double-layer flat film at the top; the composite winding device includes a heating roller area and a cold water roller area; the heating roller area is composed of a number of heating rollers, and the temperature and pressing pressure of the heating rollers are adjustable; the cold water roller area is composed of a number of cold water rollers with built-in low-temperature liquid; the composite winding device performs 360° self-rotation at the same rotation speed as the rotary traction device.

8. The system for preparing a film with an embedded mesh as claimed in Claim 7, **characterized in that** it further comprises:
A roller control device for uniformly controlling the temperature and pressure of the heating rollers and cold water rollers;
A tension control device for controlling the tension of the double-layer flat film during the winding process of the double-layer flat film;
A limiting device arranged outside the tubular film bubble to limit the position of the tubular film bubble;
An air cooling device for pre-cooling the tubular film bubble and cooling it by air before the tubular film bubble enters the composite winding device.
